(19) Europäisches Patentamt

European Patent Office

Office européen des brevets

(11) Veröffentlichungsnummer: **0 094 490**
**B1**

(12) **EUROPÄISCHE PATENTSCHRIFT**

(45) Veröffentlichungstag der Patentschrift:
28.01.87

(51) Int. Cl.⁴: **A 46 B 13/02**

(21) Anmeldenummer: 83102697.6

(22) Anmeldetag: 18.03.83

(54) **Elektrisch angetriebene Zahnbürste.**

(30) Priorität: 17.05.82 DE 3218596

(43) Veröffentlichungstag der Anmeldung:
23.11.83 Patentblatt 83/47

(45) Bekanntmachung des Hinweises auf die Patenterteilung:
28.01.87 Patentblatt 87/5

(84) Benannte Vertragsstaaten:
AT BE CH DE FR GB IT LI NL

(56) Entgegenhaltungen:
DE - A - 1 532 781
DE - A - 2 940 275
DE - A - 2 944 391
FR - A - 1 345 588
US - A - 3 168 834

(73) Patentinhaber: Blendax-Werke R. Schneider GmbH & Co., Rheinallee 88, D-6500 Mainz (DE)

(72) Erfinder: Klein, Horst, Schwarzwaldstrasse 6, D-6233 Keikheim-Fischbach (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die vorliegende Erfindung betrifft eine elektrisch angetriebene Zahnbürste mit oszillierender Schwingung, deren Schwingungswinkel unterschiedlich einstellbar ist.

Elektrisch angetriebene Zahnbürsten, die eine oszillierende Bewegung zur Zahnreinigung ausüben, sind bereits seit langem bekannt und werden erfolgreich zur Reinigung der Zähne angewandt. Diese oszillierende Bewegung wird durch Umwandlung einer durch einen Elektromotor ausgeübten Rotationsbewegung mit Hilfe eines Bewegungswandlers erzielt. Hierbei erfolgt die Oszillationsbewegung in der Regel innerhalb einer konstanten Schwingungsamplitude, die mittels eines Wellenstumpfes auf eine auf diesen aufgesteckte Zahnbürste übertragen wird.

Es wurde auch bereits vorgeschlagen, elektrisch angetriebene Zahnbürsten mit einer oszilierenden Bewegung zu konstruieren, deren Schwingungsamplitude verstellbar ist, um diese auf die individuellen Verhältnisse des Zahnbürstenbenutzers einstellen zu können.

So ist aus der DE-A-1 532 781 eine motorisch angetriebene Zahnbürste mit einem Kurbeltrieb zur Erzeugung von Schwingbewegungen an der Bürste bekannt, wobei die Amplitude der Schwingbewegungen durch Verschiebung mindestens eines Angriffspunktes der miteinander in Eingriff stehenden Kurbeltriebelemente verstellbar ist.

Elektrische Zahnbürsten mit Kurbeltrieb sind aufgrund ihrer umständlichen Wirkungsweise und des aufwendigen Konstruktionsmechanismusses in der Praxis nicht verwendet worden.

Aus der DE-A-2 940 275 ist ebenfalls eine Zahnbürste mit elektrischem Antrieb bekannt, deren Stärke der Schwingbewegungen der Bürste verringerbar ist.

Diese Aufgabe wird konkret dadurch gelöst, dass bei dem elektromotorischen Antrieb der Zahnbürste über eine Kurbelschleife die Verkleinerung der Amplitude der Schwingbewegungen durch eine Abstandsvergrösserung zwischen der Achse des Elektromotors und der Bürstenachse bzw. die Regulierung der Stärke der Schwingbewegungen durch die Einschaltung eines Widerstandes in den Stromkreis des elektrischen Antriebs erfolgt.

Eine solche Massnahme bedingt ebenfalls die Mitverwendung weiterer konstruktiver Merkmale, durch die die Wirkungsweise der Bürste kompliziert wird.

Eine geeignete Massnahme zur Variation des Schwingungswinkels einer oszillierenden Elektrozahnbürste, die auch in die Praxis Eingang gefunden hat, beschreibt die DE-A-2 944 391:

Hier wird mittels eines Exzenterstiftes, der auf einem von einem Elektromotor angetriebenen drehbaren Träger befestigt ist und mit einem an einem Innenteil des Zahnbürstenhalters vorgesehenen Längsschlitz, der sich im wesentlichen radial zur Längsachse des Instrumentenhalters erstreckt und in welchen der Exzenterstift frei verschiebbar eingreift, der Radialabstand zwischen der Drehachse des Trägers des Exzenterstiftes und dessen Eingriffsstelle im Längsschlitz verändert, wodurch auf verhältnismässig einfache Art eine Verstellung des Schwingungswinkels erfolgen kann.

Diese gegenüber dem vorher beschriebenen Stand der Technik zwar fortschrittliche Vorrichtung ist jedoch immer noch verhältnismässig kompliziert aufgebaut und störungsanfällig.

Darüberhinaus ist durch diese Konstruktion, unter Einhaltung eines für den Gebrauch akzeptablen Maximaldurchmessers des Handstücks der Elektrozahnbürste, nur ein maximaler Amplitudenausschlag von ca. 40° erzielbar, während es wünschenswert erscheint, einen noch höheren Spielraum bei der Stellung des Schwingungswinkels zu haben.

Erfindungsgemäss war daher die Aufgabe zu lösen, eine elektrische Zahnbürste zu konstruieren, deren Schwingungswinkel stufenlos verstellt werden kann, die einfach konstruiert ist und ohne Störungsanfälligkeit arbeitet und die beschriebenen Nachteile der aus dem Stand der Technik bekannten, gattungsgleichen elektrischen Zahnbürsten nicht aufweist.

Die Lösung dieser Aufgabe besteht darin, dass die Rotationsbewegung eines üblichen Elektromotors über ein Ritzel und ein Zahnrad mit exzentrisch angebrachtem Gleitstein und eine Gabel in eine schwingende Bewegung umgewandelt wird. Die von der Gabel ausgehende Achse ist gegenüber der Waagrechten abgewinkelt. Auf dieser schräg im Raum stehenden Achse ist ein Bauteil befestigt, das die schwingende Bewegung über eine zweite Gabel, die verschiebbar auf der eigentlichen Abtriebswelle montiert ist, auf diese Abtriebswelle überträgt, die das Ansatzstück für das Aufstecken der Zahnbürste bildet. Durch Verschieben dieser zweiten Gabel ist der Hebelarm dermassen verstellbar, dass der Winkelausschlag der auf dem äusseren Ende der Abtriebswelle aufgesteckten Zahnbürste zwischen etwa 15 und etwa 55° liegen kann.

Die vorliegende Erfindung wird durch die Figuren 1 bis 3 näher erläutert:

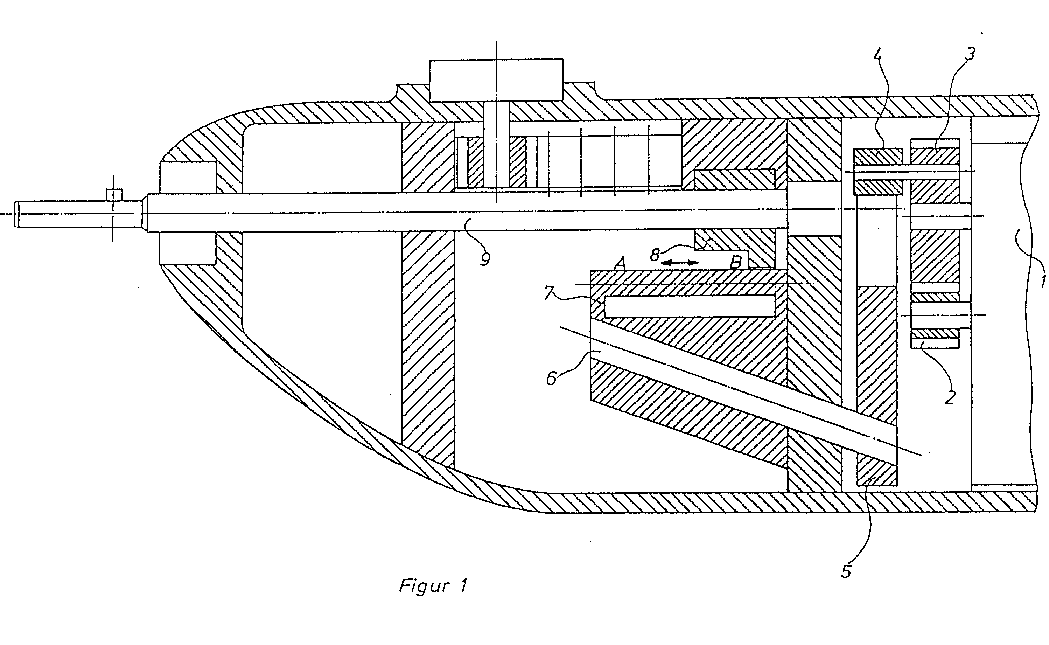

Dabei zeigt die Figur 1 einen schematischen Schnitt durch das Handstück eines erfindungsgemäss ausgestalteten Antriebs für eine Elektrozahnbürste.

Figur 2 gibt einen Schnitt entsprechend der Linie C–D aus Figur 1 wieder.

Figur 3 zeigt einen Ausschnitt aus Figur 1 aus einer anderen Perspektive.

Gemäss Figur 1 befindet sich in einem in seinen Umrissen teilweise angedeuteten Zahnbürstengehäuse als Antriebsquelle ein rotierender Elektromotor 1, der direkt durch das elektrische Netz, einen Trafo oder eine Batterie bzw. einen Akkumulator gespeist werden kann. Die rotierende Bewegung dieses Motors 1 wird durch ein Ritzel 2, ein Zahnrad 3 mit einem exzentrisch angebrachten Gleitstein 4 und eine Gabel 5 in eine schwingende Bewegung umgewandelt. Die von der Gabel 5 ausgehende Achse 6 ist gegenüber der Waagrechten abgewinkelt, vorzugsweise etwa 15° bis etwa 35°.

An dieser schräg im Raum stehenden Achse 6 ist ein Bauteil 7 befestigt, das die schwingende Bewegung über eine zweite Gabel 8, die verschiebbar auf der Abtriebswelle 9 montiert ist, auf diese überträgt. Am äusseren, aus dem Gehäuse hervorragenden Ende der Abtriebswelle 9 wird eine hier nicht dargestellte Aufsteckbürste aufgesteckt.

Durch Verschieben der Gabel 8 in Richtung A–B durch hier nicht dargestellte, an der Aussenseite des Gehäuses angebrachte Mittel wie Hebel, Schieber, etc., kann während des Betriebs des Elektromotors der Schwingungswinkel der Bürste so weit verstellt werden, dass Winkelausschläge der Aufsteckzahnbürste zwischen etwa 15° und etwa 60° erreicht werden können.

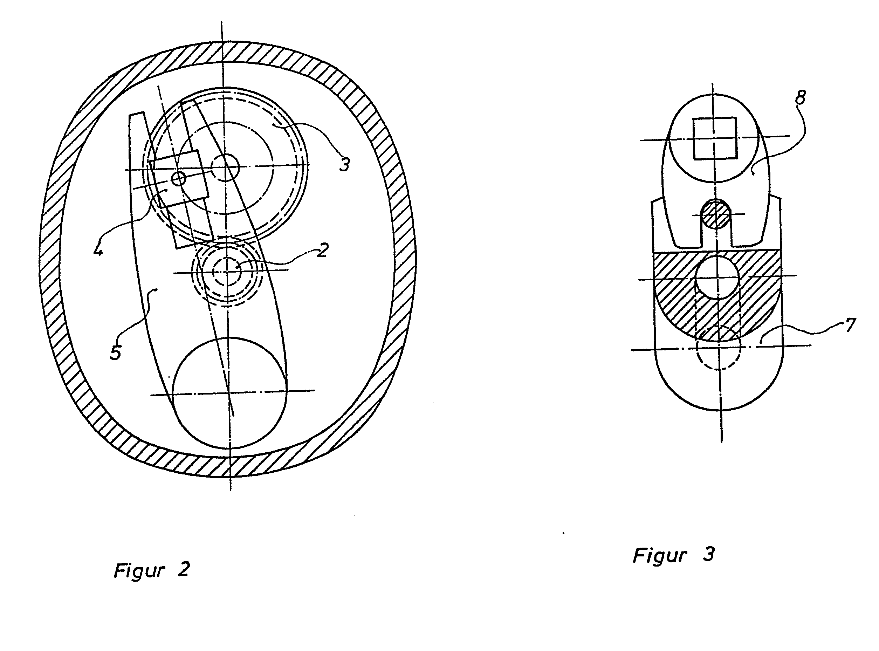

Figur 2 stellt einen Querschnitt durch Figur 1 entsprechend der Linie C–D dar und verdeutlicht die Funktion des Bewegungsumwandlungssystems.

Figur 3 zeigt den Mechanismus der Schwingungsamplituden-Verstellung in besonderer Deutlichkeit.

**Patentanspruch**

Elektrisch angetriebene Zahnbürste mit einem Zahnbürstenhalter, der durch einen im Handstück untergebrachten Elektromotor, dessen Rotationsbewegung über ein Ritzel und ein Zahnrad mit exzentrisch angebrachtem Gleitstein und eine Gabel in eine schwingende Bewegung umgesetzt wird, oszillierend bewegt wird, wobei der Schwingungswinkel verstellbar ist, dadurch gekennzeichnet, dass die von der Gabel (5) ausgehende Achse (6) gegenüber der Waagrechten abgewinkelt ist und an dieser Achse (6) ein Bauteil (7) befestigt ist, das die schwingende Bewegung über eine weitere Gabel (8), die verschiebbar auf einer Abtriebswelle (9) angeordnet ist, auf diese überträgt.

**Claim**

Electric toothbrush with toothbrush holder which is put in oscillating motion by an electric motor placed in the handle, the motion of rotation of the motor is transformed into oscillating motion via a pinion and a gear wheel with eccentrically fixed sliding pad and a fork, whereas the oscillating angle is adjustable, characterized in that the axis (6) extending from the fork (5) forms an angle to the horizontal and that a part (7) is fixed at this axis (6) that transfers the oscillating motion via another fork (8) to a primary shaft (9) on which that fork (8) is arranged movably.

**Revendication**

Brosse à dents électrique avec porte-brosse à dents mise en mouvements oscillatoires par un moteur électrique placé dans la manche dont les mouvements à rotation sont transformés en des mouvements oscillatoires par un pignon et une roue dentée avec pièce baladeuse fixée de manière excentrique et une jumelle, où l'angle d'oscillations est ajustable, caractérisée par le fait que l'axe (6) qui part de la jumelle (5) forme un angle envers de l'horizontale et qu'une pièce détachée (7) est fixée à cet axe (6) laquelle transmet les mouvements oscillatoires sur un arbre moteur de commande (9) par une autre jumelle (8), placée de manière mobile sur celui-ci.

Figur 1

0 094 490

0 094 490

Figur 2

Figur 3